Europäisches Patentamt

**European Patent Office**

Office européen des brevets

(11) Numéro de publication : **0 039 703**
**B1**

(12) FASCICULE DE BREVET EUROPÉEN

(45) Date de publication du fascicule du brevet :
29.02.84

(51) Int. Cl.³ : **H 02 G 15/10, H 02 G 15/103**

(21) Numéro de dépôt : **80902118.1**

(22) Date de dépôt : **07.11.80**

(86) Numéro de dépôt international :
**PCT/FR 80/00160**

(87) Numéro de publication internationale :
**WO WO/81014 (28.05.81 Gazettee 81/13)**

(54) **MANCHON POUR PROTEGER L'EPISSURE DE CABLES ELECTRIQUES OU TELEPHONIQUES.**

(30) Priorité : **15.11.79 FR 7928178**
**26.03.80 FR 8006660**

(43) Date de publication de la demande :
**18.11.81 Bulletin 81/46**

(45) Mention de la délivrance du brevet :
**29.02.84 Bulletin 84/09**

(84) Etats contractants désignés :
**AT CH DE GB LI NL SE**

(56) Documents cités :
**DE-A- 1 813 201**
**DE-A- 2 020 637**
**DE-A- 2 652 803**
**DE-B- 2 063 097**
**DE-C- 679 654**
**DE-U- 7 739 190**
**FR-A- 2 080 335**
**FR-A- 2 090 148**
**FR-A- 2 301 119**
**GB-A- 28 094**
**GB-A- 913 727**
**US-A- 2 771 502**
**US-A- 2 788 385**
**US-A- 3 715 459**

(73) Titulaire : **ETABLISSEMENTS MOREL - ATELIERS**
**ELECTROMECANIQUES DE FAVIERES**
**Favières**
**F-28170 Chateaneuf-en-Thymerais (FR)**

(72) Inventeur : **MOREL, André**
**Favières**
**F-28170 Chateauneuf-en-Thymerais (FR)**
Inventeur : **MOREL, Jacques**
**Favières**
**F-28170 Chateauneuf-en-Thymerais (FR)**

(74) Mandataire : **Bouju, André**
**38 Avenue de la Grande Armée**
**F-75017 Paris (FR)**

# Manchon pour protéger l'épissure de câbles électriques ou téléphoniques

La présente invention concerne un manchon pour protéger l'épissure de câbles électriques ou téléphoniques.

Dans la demande de brevet français n° 79 12 989 déposée le 22 mai 1979 au nom de la Demanderesse, on a décrit un manchon de ce genre. Ce manchon comprend deux demi-coquilles assemblées par leurs bords adjacents au moyen de vis de serrage et recouvrant l'épissure réalisée entre deux câbles notamment téléphoniques. Les bords adjacents de ces demi-coquilles comportent une gorge définissant lors de l'assemblage de ces demi-coquilles un canal, des moyens étant prévus pour injecter dans ce canal une matière pâteuse permettant d'établir l'étanchéité entre les bords assemblés des deux demi-coquilles. Cette matière pâteuse évite ainsi la pénétration de l'humidité à l'intérieur du manchon. Cette matière pâteuse peut être par exemple une graisse électriquement isolante.

Les extrémités opposées de ce manchon comportent des mâchoires pour fixer axialement les extrémités des câbles au manchon. Ces mâchoires comportent deux éléments de mâchoire serrés l'un sur l'autre autour du câble au moyen de vis de serrage. D'autre part, les extrémités assemblées des deux demi-coquilles définissent une chambre annulaire qui entoure le câble et qui communique avec le canal ménagé entre les bords assemblés des demi-coquilles. Ainsi la graisse injectée dans ce canal pénètre dans la chambre annulaire précitée, ce qui permet d'établir l'étanchéité entre les câbles et les extrémités opposées du manchon.

Les avantages d'un tel manchon résident dans le fait que son étanchéité peut être réalisée avec une quantité relativement réduite de graisse ou matière pâteuse analogue. De plus, l'utilisation d'une graisse pour réaliser cette étanchéité permet de démonter aisément le manchon, sans qu'il soit nécessaire de le détruire, de sorte qu'il reste réutilisable après démontage.

Le but de la présente invention est de créer un manchon de protection pour épissure de câbles électriques notamment téléphoniques dont l'étanchéité et la facilité de montage autour des câbles sont sensiblement améliorées par rapport au manchon précité.

L'invention concerne un manchon selon le préambule de la revendication 1. L'invention est caractérisée en ce que chacune des extrémités du manchon porte au moins deux mâchoires amovibles définissant entre elles une chambre communiquant avec le canal.

En position d'assemblage du manchon autour des câbles, ces deux mâchoires prennent appui sur ces câbles en définissant une chambre sensiblement close. Lors de l'injection de la matière pâteuse cette dernière remplit cette chambre en établissant ainsi l'étanchéité requise entre le manchon et les câbles. Simultanément ces mâchoires fixent axialement les câbles aux extrémités opposées du manchon.

Le montage d'un tel manchon autour de l'épissure réalisée entre les câbles est particulièrement aisé et l'étanchéité obtenue est excellente.

Selon une version avantageuse de l'invention, les deux demi-coquilles du manchon sont assemblées l'une sur l'autre au moyen de vis de serrage et les deux mâchoires sont dimensionnées de façon à pouvoir prendre appui sur le câble correspondant, lors du serrage des vis d'assemblage des deux demi-coquilles.

Cette disposition supprime tout organe de serrage annexe et propre aux mâchoires, ce qui simplifie considérablement le montage du manchon autour des câbles.

Selon une version préférée de l'invention, un ruban adhésif à base d'élastomère est enroulé autour des extrémités des câbles, les deux mâchoires précitées étant destinées à prendre appui sur ce ruban adhésif, lors de l'assemblage des demi-coquilles l'une sur l'autre.

Ce ruban adhésif en surépaisseur sur les câbles permet de réaliser un joint d'étanchéité entre les câbles et les mâchoires. La chambre définie entre les deux mâchoires en position de serrage sur le câble est de ce fait sensiblement étanche grâce au joint d'étanchéité précité, ce qui permet d'y injecter la matière pâteuse sous une pression relativement élevée, ce qui est favorable à l'obtention d'une excellente étanchéité.

De préférence, les mâchoires sont fixées de façon amovible et retenues axialement dans des logements ménagés sur la face interne des extrémités du manchon.

Du fait de cette fixation amovile des mâchoires, un manchon de dimension unique peut servir à la protection de câbles de diamètres différents, en choisissant parmi un jeu de mâchoires de dimensions différentes, les mâchoires qui sont adaptées au câble à protéger.

D'autres particularités et avantages de l'invention apparaîtront encore dans la description ci-après.

Aux dessins annexés donnés à titre d'exemples non limitatifs :

La figure 1 est une vue en coupe longitudinale avec arrachement d'un manchon conforme à l'invention entourant l'épissure réunissant deux câbles ;

La figure 2 est une vue en plan suivant la face interne de l'une des demi-coquilles du manchon représenté sur la figure 1 ;

La figure 3 est une vue en coupe suivant le plan III-III de la figure 1 ;

La figure 4 est une vue en perspective, éclatée et à échelle agrandie des deux éléments constituant une mâchoire du manchon conforme à l'invention ;

La figure 5 est une vue de profil montrant les deux éléments de la mâchoire selon la figure 4 en position d'assemblage ;

La figure 6 est une vue en coupe suivant le plan VI-VI de la figure 1 ;

La figure 7 est une vue analogue à la figure 2 montrant une variante de réalisation du manchon conforme à l'invention ;

La figure 8 est une vue analogue à la figure 7 montrant une autre variante de réalisation ;

La figure 9 est une vue en plan d'une variante d'élément de mâchoire ;

La figure 10 est une vue en coupe suivant le plan X-X de la figure 9 ;

La figure 11 est une vue en coupe suivant le plan XI-XI de la figure 9 ;

La figure 12 est une vue en coupe transversale d'un manchon comportant une mâchoire complète conforme aux figures 9 et 11, appliquée sur un câble ;

La figure 13 est une vue en plan d'une autre variante d'élément de mâchoire ;

La figure 14 est une vue en coupe suivant le plan XIV-XIV de la figure 13 ;

La figure 15 est une vue en plan de deux éléments de mâchoires conformes aux figures 13 et 14 disposés autour d'un câble, avant serrage ;

La figure 16 est une vue analogue à la figure 15, après serrage des éléments de mâchoires sur le câble ;

La figure 17 est une vue en plan d'un élément de mâchoire adapté au passage de deux câbles ;

La figure 18 est une vue en plan d'une lame spéciale pour découper les éléments de mâchoire.

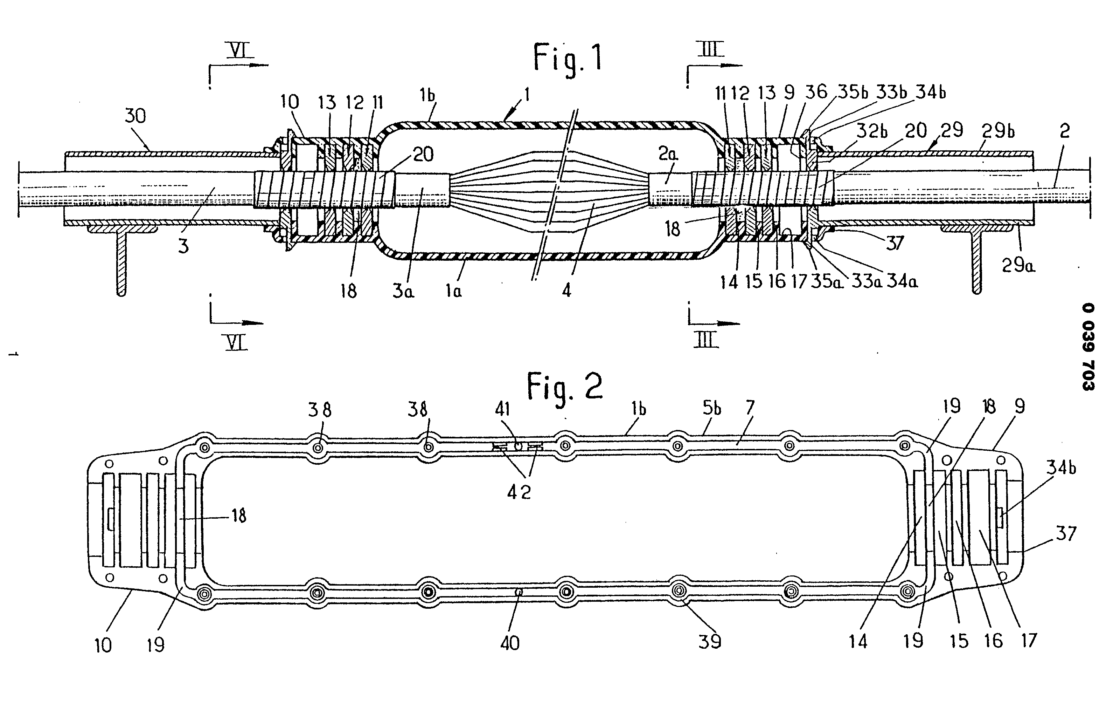

Dans la réalisation de la figure 1 le manchon 1 de forme générale cylindrique entoure axialement deux câbles téléphoniques 2, 3 raccordés par une épissure 4. Ce manchon 1 est en matière plastique telle que polyamide, polyester ou copolymère d'acrylonitrile, butadiène et styrène.

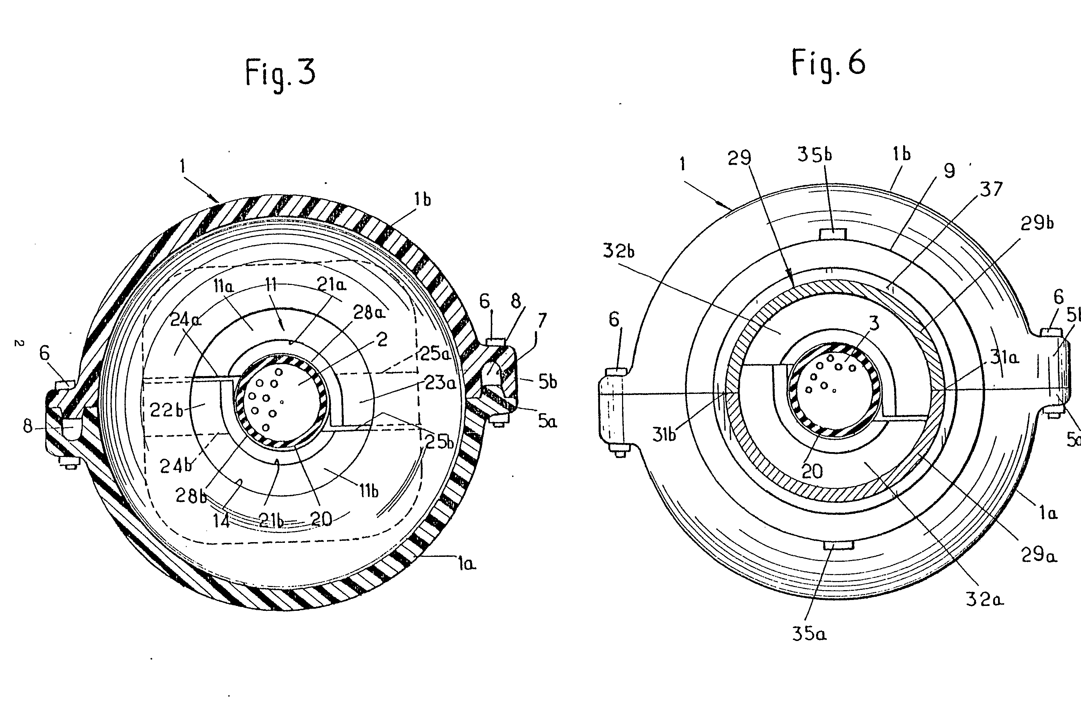

Le manchon 1 est réalisé en deux demi-coquilles 1a, 1b assemblées par leurs bords adjacents 5a, 5b (voir figure 3) au moyen de vis de serrage 6. Le bord 5b de la demi-coquille 1b comporte une gorge 7 qui définit en position d'assemblage avec la demi-coquille 1a un canal 8 qui s'étend suivant le périmètre défini par le plan de jonction des deux demi-coquilles 1a, 1b.

Les extrémités opposées 9, 10 du manchon 1 comportent des mâchoires 11, 12, 13 qui serrent les câbles 2, 3 et qui fixent ainsi ces derniers axialement au manchon 1. Ce serrage est obtenu lors de l'assemblage des demi-coquilles 1a, 1b l'une sur l'autre au moyen des vis d'assemblage 6.

Dans la réalisation représentée, les mâchoires 11, 12, 13 sont fixées de façon amovible et retenues axialement dans des logements 14, 15, 16 ménagés sur la face interne 17 des extrémités 9 et 10 du manchon 1. Ces logements 14, 15, 16 présentent une section en U adaptée à celle des mâchoires 11, 12, 13 et s'étendent sur toute la périphérie de la face interne 17 des extrémités 9 et 10 du manchon 1.

Les deux mâchoires 11, 12 les plus proches de l'épissure 4 définissent entre elles une chambre 18 sensiblement close qui communique avec la gorge 7 de la demi-coquille 1b par des passages 19 (voir figure 2).

On voit d'autre part sur la figure 1 qu'un ruban adhésif 20 à base d'élastomère est enroulé autour des extrémités 2a, 3a des câbles téléphoniques 2 et 3, les mâchoires 11, 12, 13 prenant appui sur ce ruban 20. Ce ruban 20 peut être réalisé par exemple en caoutchouc adhésif non vulcanisé dont le durcissement, c'est-à-dire la vulcanisation, s'effectue à l'air libre.

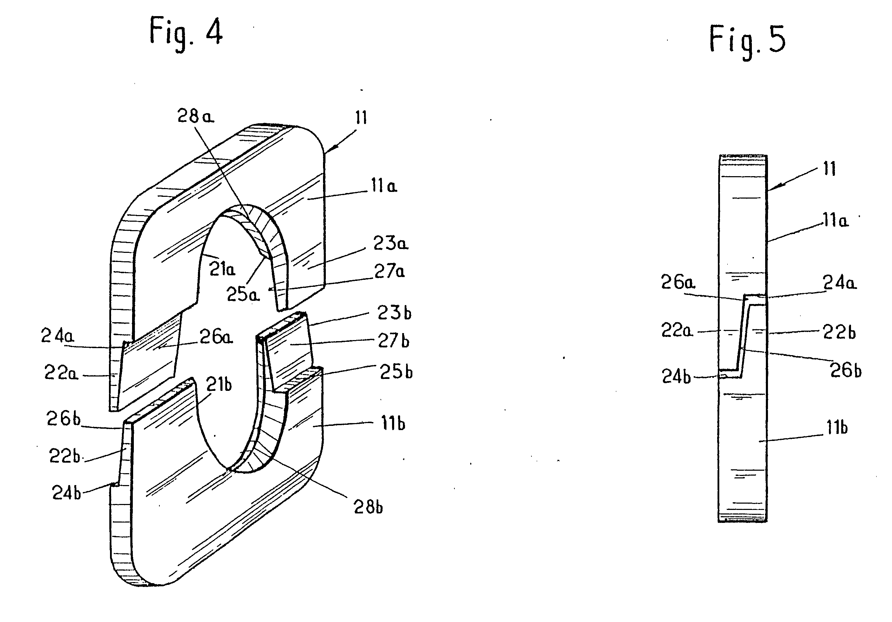

Sur les figures 3 à 6, on voit que la mâchoire 11 comporte deux éléments de mâchoire 11a, 11b comportant chacun une encoche 21a (ou 21b) sensiblement en demi-cercle dont le rayon est adapté à celui du câble 2 (ou 3). Les encoches 21a et 21b sont bordées respectivement par deux ailes 22a, 23a et 22b, 23b. Ces ailes 22a, 23a et 22b, 23b comportent des décrochements 24a, 25a, 24b, 25b. Ces derniers permettent l'emboîtement des ailes précitées dans le prolongement l'une de l'autre comme indiqué sur la figure 5. De plus, les décrochements 24a, 25a, 24b, 25b définissent des surfaces d'appui mutuel 26a, 27a, 26b, 27b. Les surfaces d'appui 26a, 27a de l'élément de mâchoire 11a et 26b, 27b de l'élément de mâchoire 11b sont dirigées dans les directions opposées.

Par ailleurs, les encoches 21a, 21b des éléments de mâchoire 11a, 11b présentent un profil biseauté dont le sommet 28a (ou 28b) est dirigé vers le centre de l'encoche correspondante 21a (ou 21b).

Les autres mâchoires 12, 13 sont identiques à la mâchoire 11 décrite ci-dessus.

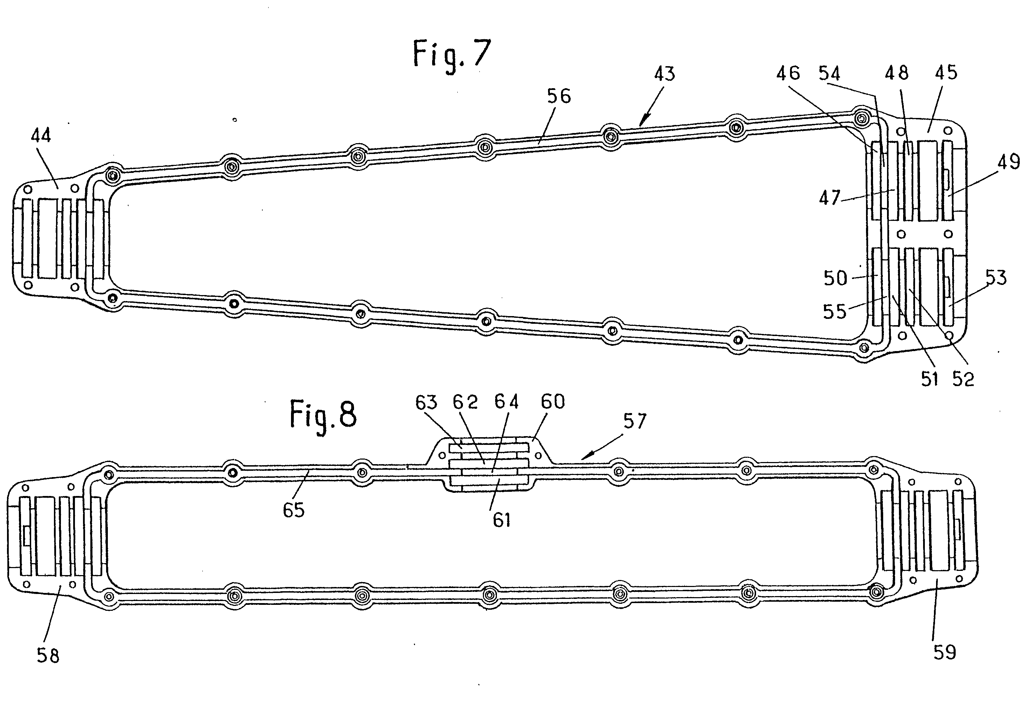

Dans la réalisation représentée (voir figure 1), les extrémités 9, 10 du manchon 1 sont prolongées par des embouts 29, 30 réalisés en deux parties identiques 29a, 29b (voir figure 6) sensiblement jointives le long de deux génératrices diamétrales 31a, 31b. L'extrémité de chaque embout 29, 30 adjacente à l'extrémité 9, 10 du manchon 1 porte une mâchoire constituée de deux éléments de mâchoire 32a, 32b analogues aux éléments de mâchoire 11a, 11b. Ces deux éléments de mâchoire 32a, 32b sont réalisés d'une seule pièce avec les parties correspondantes 29a, 29b de l'embout 29 (ou 30).

En position d'assemblage du manchon 1, comme indiqué sur les figures 1 à 6, les deux éléments de mâchoire 32a, 32b prennent appui sur le ruban adhésif 20 enroulé autour des câbles 2 ou 3 adjacents.

Chaque partie 29a, 29b de l'embout 29 comporte (voir figures 1 et 6) dans le prolongement des éléments de mâchoire 32a, 32b et en saillie vers l'extérieur, des languettes élastiques 33a, 33b. Ces dernières sont engagées dans des ouvertures diamétrales 34a, 34b de l'extrémité correspondante 9 du manchon 1. Ces languettes élastiques 33a, 33b portent des becs de verrouillage 35a, 35b permettant de solidariser ces languettes aux ouvertures correspondantes 34a, 34b.

En position de verrouillage, les éléments de mâchoire 32a et 32b sont en appui contre une cloison radiale 36 ménagée à l'intérieur de l'extrémité 9 (ou 10) du manchon 1. D'autre part, chacune des parties 29a, 29b de l'embout 29 (ou 30) est calée radialement contre un épaulement annulaire 37 de l'extrémité 9 (ou 10) du manchon 1.

Par ailleurs, le manchon 1 conforme à l'invention présente la particularité (voir figure 2) que les trous 38 pour le passage des vis 6 d'assemblage des demi-coquilles 1a, 1b débouchent dans la gorge 7 ménagée sur le bord 5b de la demi-coquille 1b. De plus, cette gorge 7 présente des élargissements 39 au niveau de ces trous 38, de sorte que la matière pâteuse étanche à l'humidité qui est injectée dans la gorge 7 peut passer de part et d'autre des vis d'assemblage 6 engagées dans les trous 38.

L'injection de cette graisse ou autre matière pâteuse analogue est réalisée par un orifice d'injection 40 (voir figure 6) qui débouche dans la gorge 7. L'évacuation de l'air du canal défini par cette gorge 7 est réalisée par un évent 41 qui communique avec la gorge 7 à l'opposé de l'orifice d'injection 40. Cet évent 41 est placé entre deux rétrécissements 42 de la gorge 7 dont le rôle sera expliqué lors de la description de l'utilisation du manchon conforme à l'invention.

La mise en place du manchon 1 autour de l'épissure 4 qui relie les câbles téléphoniques 2 et 3 est réalisée comme suit.

On emboîte dans les logements 14, 15, 16 ménagés aux extrémités des demi-coquilles 1a et 1b les éléments de mâchoire 11a, 11b et ceux correspondant aux mâchoires 12 et 13. On fixe par encliquetage au moyen des languettes élastiques 33a et 33b les parties 29a, 29b des embouts 29 (et 30) aux demi-coquilles 1a et 1b correspondantes.

On enroule autour des extrémités 2a et 3a des câbles 2 et 3 un ruban adhésif 20, par exemple en caoutchouc auto-vulcanisant, jusqu'à obtenir une surépaisseur de l'ordre de 1 mm.

On assemble les demi-coquilles 1a, 1b l'une sur l'autre et on les fixe ensemble à l'aide des vis de serrage 6.

Etant donné que le rayon des encoches des éléments de mâchoire correspondant aux mâchoires 11, 12, 13 et 32a et 32b correspond à celui des câbles 2 et 3, le serrage des vis d'assemblage 6 a pour effet que le profil biseauté de ces encoches pénètre dans le ruban en caoutchouc 20 sur une profondeur qui est égale à la surépaisseur de ce ruban 20.

Par ailleurs, lors de l'assemblage, les éléments composant les mâchoires s'emboîtent les uns dans les autres par leurs ailes telles que 22a, 23a, 22b et 23b. Cet emboîtement permet de réaliser entre les différentes mâchoires des chambres sensiblement closes, ainsi qu'une solidarisation des éléments de chaque mâchoire qui permet d'obtenir une excellente fixation axiale des câbles 2 et 3 aux extrémités 9 et 10 du manchon 1.

Il suffit ensuite d'injecter dans l'orifice d'injection 40 du manchon 1 une matière pâteuse telle qu'un élastomère silicone ou polyuréthane auto-vulcanisant. Cette graisse pénètre dans la gorge 7 définie sur le pourtour des demi-coquilles 1a et 1b et remplit les deux chambres 18 comprises entre les mâchoires 11 et 12 disposées aux extrémités opposées 9 et 10 du manchon 1. L'air remplissant le canal 8 et les chambres 18 est évacué à l'extérieur par l'évent 41.

Lorsque la matière pâteuse accède de chaque côté des rétrécissements 42 de la gorge 7, sa progression est freinée, ce qui entraîne une compression de cette matière et une évacuation rapide de l'air résiduel.

Cette pression permet d'obtenir une excellente étanchéité à la fois au niveau des bords 5a, 5b des deux demi-coquilles 1a et 1b et au niveau des mâchoires 11 et 12 de serrage des câbles 2 et 3, grâce notamment à l'enfoncement du profil en biseau des encoches de ces derniers dans le ruban adhésif 20.

Par ailleurs, étant donné que la matière pâteuse injectée dans la gorge 7 contourne les vis d'assemblage 6, on ne risque aucune fuite de matière au niveau de ces vis vers l'intérieur ou l'extérieur du manchon 1.

Le rôle des mâchoires 13 et des éléments de mâchoire 32a, 32b des embouts est principalement d'améliorer la fixation axiale des câbles 2 et 3 relativement aux efforts axiaux qui sont susceptibles d'être appliqués sur ces câbles. Les mâchoires 13 et les éléments de mâchoire 32a, 32b jouent toutefois un rôle complémentaire d'étanchéité en formant dans l'extrémité 9 et 10 du manchon autant de barrières susceptibles d'empêcher la pénétration de l'humidité à l'intérieur du manchon 1.

Les mâchoires précitées présentent en outre l'avantage d'être toutes identiques, de sorte qu'elles peuvent être réalisées par moulage d'une matière plastique à l'aide d'un seul moule.

Par ailleurs, leur mise en place et leur fixation dans les logements 14, 15, 16 sont très aisées puisqu'elles ne nécessitent aucun outil ni organe de fixation annexe tels que vis ou analogue.

Par ailleurs, le manchon conforme à l'invention peut être utilisé pour des câbles présentant des diamètres différents. A cet effet, il suffit de prévoir un jeu de mâchoires présentant des encoches de rayons différents adaptés à celui des divers câbles.

L'invention peut également s'appliquer à la réalisation de manchons pour protéger l'épissure raccordant plus de deux câbles électriques ou téléphoniques.

La figure 7 représente à titre d'exemple une demi-coquille 43 pour un manchon de forme générale tronconique. L'extrémité 44 la moins large sert au passage d'un seul câble, comme dans le cas de la réalisation décrite en référence aux figures 1 à 6.

L'autre extrémité 45 sert au passage de deux câbles parallèles. Cette extrémité 45 comporte une première série de logements 46, 47, 48, 49, recevant les éléments de mâchoire pour le serrage de l'un des câbles et une seconde série de logements 50, 51, 52, 53 pour recevoir les éléments de mâchoire assurant la fixation de l'autre câble. Entre les logements 46, 47 et 50, 51 est ménagée une chambre 54, 55 communiquant avec la gorge périphérique 56.

La figure 8 représente une demi-coquille 57 pour un manchon à dérivation. Cette demi-coquille 57 comporte deux extrémités opposées 58, 59 identiques à celles de la réalisation représentée en référence aux figures 1 à 6. La dérivation 60 sert au passage d'un troisième câble raccordé par épissure aux deux premiers et elle comporte des logements 61, 62, 63 pour la fixation d'éléments de mâchoire. Une chambre 64 ménagée entre les logements 61 et 62 communique avec la gorge périphérique 65.

Par ailleurs, le profil biseauté des encoches des éléments de mâchoires 11a, 11b et des autres mâchoires au lieu d'être continu peut être réalisé en plusieurs parties distinctes ou être remplacé par des dents.

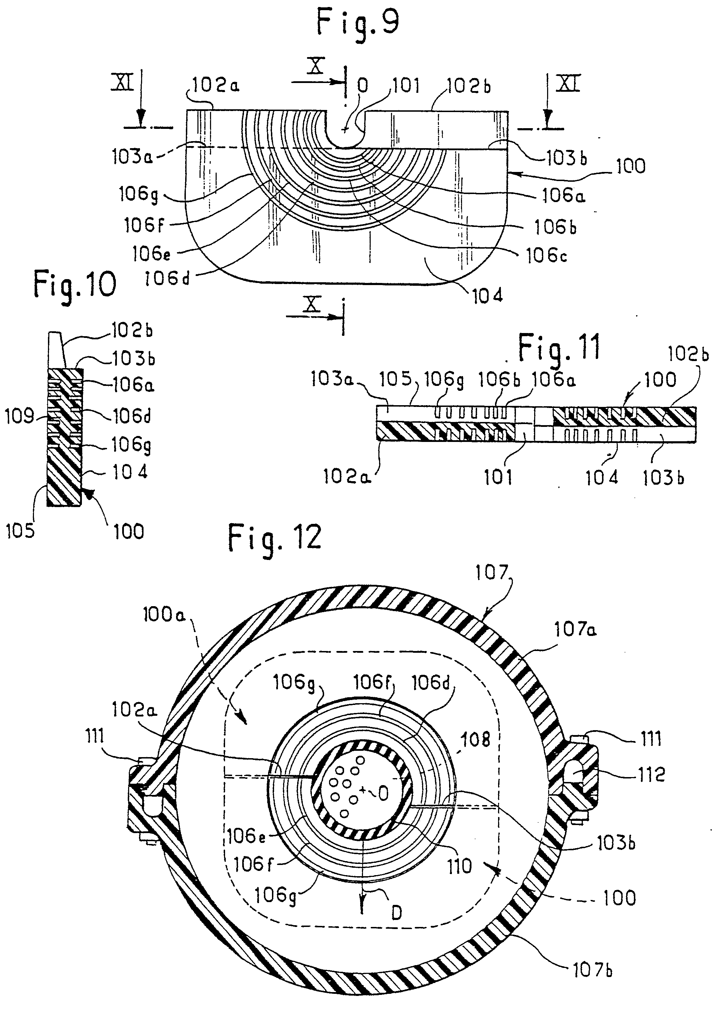

Dans la réalisation de la figure 9, l'élément de mâchoire 100 présente une encoche 101 bordée par deux ailes 102a, 102b présentant chacune un décrochement 103a, 103b permettant l'emboîtement mutuel de ces deux ailes 102a, 102b avec deux ailes correspondantes d'un second élément de mâchoire. Ces deux décrochements 103a, 103b sont orientés en sens inverse l'un par rapport à l'autre.

Chaque élément de mâchoire 100 comporte sur chacune de ses deux faces opposées 104, 105 une série de rainures 106a, 106b, 106c, 106d, ... 106g s'étendant suivant des arcs de cercle concentriques entre le décrochement 103b (ou 103a) de l'une des ailes et l'extrémité libre de l'autre aile. Le centre O de ces arcs de cercle est, en position de service des éléments de mâchoire 100, 100a (voir figure 12) placé sur l'axe du manchon 107 et du câble 108.

Les rainures 106a, ... 106g présentent des rayons croissants adaptés aux rayons de différents câbles 108.

Dans l'exemple de la figure 12, le câble 108 présente un rayon qui correspond à celui de la rainure 106d.

Comme on le voit sur les figures 10 et 11, les différentes rainures 106a, 106b, ... 106g ménagées sur la face 104, sont situées en regard des rainures disposées sur la face opposée 105. Le fond de ces rainures 106a, ... 106g délimite une paroi centrale 109 qui est découpable au moyen d'un couteau.

Dans l'exemple représenté, l'épaisseur de la paroi centrale 109 est sensiblement égale au tiers de l'épaisseur de l'élément de mâchoire 100 ou 100a.

Les éléments de mâchoire 100, 100a, sont réalisés dans une matière relativement souple, telle qu'une matière thermoplastique (par exemple élastomère de polyuréthane). Dans ces conditions, la déformabilité élastique de ces éléments de mâchoire 100, 100a, dans une direction radiale D exercée à partir du centre O est plus grande que la déformabilité de la gaine 110 du câble 108 qui est elle-même généralement réalisée en matière thermoplastique.

La mise en place des éléments de mâchoire 100, 100a, et leur fixation dans le manchon 107 est réalisée comme décrit précédemment.

Avant de placer ces éléments de mâchoire 100, 100a dans le manchon, on les adapte au diamètre du câble 108, en pratiquant dans ces éléments une encoche, réalisée par une découpe au moyen d'un couteau suivant la rainure appropriée à savoir, la rainure 106d dans l'exemple représenté.

Cette découpe est très aisée du fait de l'épaisseur réduite de la paroi centrale 109 comprise entre les rainures opposées 106a, ... 106g.

Après mise en place des éléments de mâchoire 100, 100a et du câble 108 à l'intérieur du manchon 107, on serre l'une contre l'autre les demi-coquilles 107a, 107b au moyen des vis 111. Lors de ce serrage les éléments de mâchoire 100, 100a se rapprochent l'un de l'autre. Du fait de la déformabilité élastique et radiale des éléments de mâchoire 100, 100a obtenue grâce aux rainures concentriques 106e, 106f, 106g restantes, les éléments de mâchoire 100, 100a prennent appui sur la gaine 110 du câble 108 en épousant parfaitement le profil irrégulier de celui-ci.

On réalise ainsi une excellente étanchéité entre les éléments de mâchoire 100, 100a et le câble 108, sans avoir à utiliser de ruban adhésif souple comme dans le cas de la précédente réalisation.

On peut alors injecter une matière pâteuse d'étanchéité dans le canal périphérique 112 et dans la chambre annulaire définie entre deux mâchoires adjacentes, comme décrit précédemment.

Grâce à l'excellente étanchéité réalisée entre les éléments de mâchoire 100, 100a et le câble 108, l'injection de la matière d'étanchéité peut être réalisée sous forte pression, sans risque de fuite, ce qui permet d'éviter toute pénétration d'humidité à l'intérieur du manchon 107.

Dans le cas où la matière d'étanchéité injectée dans le manchon est une résine polyuréthane, l'adhérence entre cette résine et la gaine du câble peut être améliorée, en appliquant au préalable sur le câble un primaire d'adhérence tel qu'une polyoléfine chlorée diluée dans du xylène.

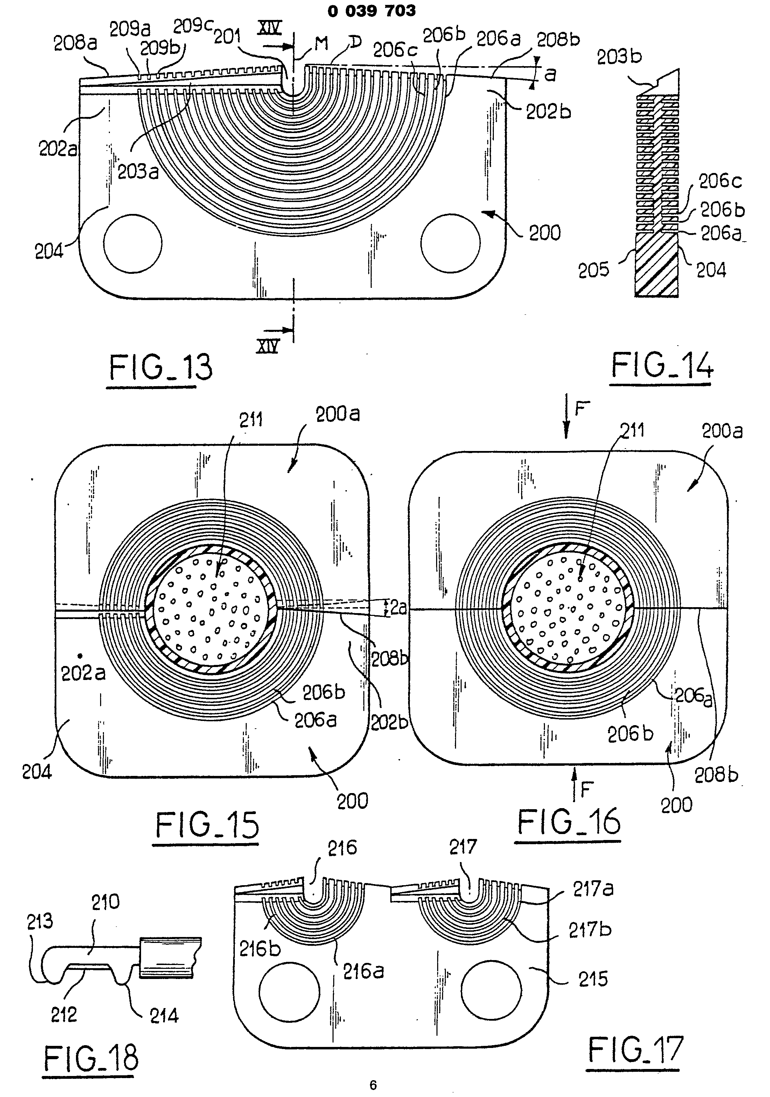

Dans la variante de réalisation des figures 13 et 14, l'élément de mâchoire 200 présente une encoche 201 bordée par deux ailes 202a, 202b, présentant chacune un décrochement 203a, 203b permettant l'emboîtement mutuel de ces deux ailes 202a, 202b avec deux ailes correspondantes d'un second élément de mâchoire 200a, comme indiqué sur les figures 15 et 16.

L'élément de mâchoire 200 comporte sur chacune de ses faces opposées 204, 205 une série de rainures 206a, 206b, 206c, etc... s'étendant suivant des arcs de cercles concentriques entre le bord des ailes 202a, 202b. Comme dans le cas de la réalisation selon les figures 9 et 11 ces rainures 206a, 206b, 206c, etc... permettent d'adapter les éléments de mâchoire 200, 200a au diamètre des câbles destinés à être protégés au moyen du manchon conforme à l'invention.

Sur la figure 13, on voit que les bords 208a, 208b des ailes 202a, 202b comportent une série d'encoches 209a, 209b, 209c, etc..., situées en regard des différentes rainures 206a, 206b, 206c, etc... Ces encoches facilitent le positionnement d'une lame de couteau 210 telle que représentée sur la figure 18, pour le découpage des éléments de mâchoire le long des arcs de cercle définis par les rainures 206a, 206b, etc...

Par ailleurs, sur la figure 13, on voit que les bords 208a, 208b des ailes 202a, 202b forment un léger angle a (2 à 5°) par rapport à la droite D qui est perpendiculaire au plan médian M de l'élément de mâchoire 200. Les deux bords 208a, 208b forment ainsi ensemble un angle obtus saillant vers l'extérieur de l'élément.

Ainsi lorsque les deux éléments de mâchoire 200, 200a sont mis en place sur le câble 211, comme indiqué sur la figure 15, les bords adjacents 208a, 208b des deux éléments de mâchoire forment entre eux un angle 2a. Cet angle 2a disparaît du fait de l'élasticité de la matière, lorsque les deux éléments de mâchoire sont serrés l'un contre l'autre suivant les flèches F de la figure 16, serrage qui est obtenu lors du vissage des deux demi-coquilles du manchon conforme à l'invention.

L'expérience a montré que grâce à l'angle a il était possible d'obtenir un joint élastique parfaitement étanche entre les bords adjacents 208a, 208b des éléments de mâchoire.

La lame de couteau 210 représentée sur la figure 18 présente un profil particulièrement bien adapté au découpage des éléments de mâchoire 200, 200a. La partie tranchante 212 est bordée par deux protubérances 213, 214. La protubérance 213 présente un profil arrondi pour ne pas blesser le doigt de l'utilisateur lorsque ce doigt prend appui sur la lame 210. Par ailleurs, on voit sur la figure 18 que la partie tranchante 212 présente une longueur qui correspond sensiblement à l'épaisseur d'un élément de mâchoire 200 ou 200a (voir également la figure 14).

Dans la réalisation de la figure 17, l'élément de mâchoire 215 est adapté au passage de deux câbles. Cet élément comporte à cet effet deux encoches 216, 217 autour desquelles sont ménagées des rainures en arc de cercle 216a, 216b, ... et 217a, 217b, ...

## Revendications

1. Manchon pour protéger l'épissure (4) de câbles électriques ou téléphoniques (2, 3) comprenant deux demi-coquilles (1a, 1b) assemblées par leurs bords adjacents, autour de l'épissure, ces bords adjacents comportant une gorge (7) définissant en position d'assemblage un canal (8), des moyens (40) étant prévus pour injecter dans ce canal une matière pâteuse établissant l'étanchéité entre lesdits bords adjacents, les extrémités opposées (9, 10) du manchon comportant des mâchoires (11, 12, 13) pour fixer axialement les extrémités des câbles au manchon et des moyens pour réaliser l'étanchéité entre ces câbles et les extrémités du manchon, caractérisé en ce que chacune des extrémités (9, 10) du manchon porte au moins deux mâchoires amovibles (11, 12) définissant entre elles une chambre (18) communiquant avec le canal (8).

2. Manchon conforme à la revendication 1, dans lequel les deux demi-coquilles (1a, 1b) sont assemblées l'une sur l'autre au moyen de vis de serrage (6), caractérisé en ce que les mâchoires (11, 12) sont dimensionnées de façon à pouvoir prendre appui sur les câbles (2, 3), lors du serrage des vis d'assemblage (6) des deux demi-coquilles.

3. Manchon conforme à l'une quelconque des revendications 1 ou 2, caractérisé en ce qu'un ruban adhésif (20) à base d'élastomère est enroulé autour des extrémités des câbles (2, 3), les deux mâchoires (11, 12) étant destinées à prendre appui sur ce ruban adhésif (20) lors de l'assemblage des demi-coquilles (1a, 1b) l'une sur l'autre.

4. Manchon conforme à l'une quelconque des revendications 1 à 3, caractérisé en ce que les mâchoires (11, 12) sont fixées de façon amovible et retenues axialement dans des logements (14, 15) ménagés sur la face interne des extrémités (9, 10) du manchon (1).

5. Manchon conforme à l'une quelconque des revendications 1 à 4, caractérisé en ce que chaque mâchoire (11, 12) comporte deux éléments de mâchoire (11a, 11b) présentant chacune une encoche (21a, 21b) sensiblement en demi-cercle de rayon adapté à celui du câble, cette encoche étant bordée par deux ailes (22a, 22b, 23a, 23b) qui se terminent par des décrochements (26a, 26b, 27a, 27b) permettant l'emboîtement des ailes des deux éléments de mâchoire sensiblement dans le prolongement les unes avec les autres, ces décrochements définissant des surfaces d'appui mutuel des ailes dirigées dans des directions opposées pour chaque élément de mâchoire (11a, 11b).

6. Manchon conforme à la revendication 5, caractérisé en ce que l'encoche (21a, 21b) de chaque élément de mâchoire (11a, 11b) présente un profil biseauté dont le sommet (28a, 28b) est dirigé vers le centre de l'encoche.

7. Manchon conforme à l'une quelconque des revendications 2 à 6, caractérisé en ce que chaque extrémité (9, 10) du manchon porte trois mâchoires identiques (11, 12, 13) venant prendre appui sur le ruban adhésif (20) à base d'élastomère enroulé sur les câbles (2, 3), le canal (8) ménagé entre les bords adjacents des deux demi-coquilles (1a, 1b) assemblées débouchant entre les deux mâchoires (11, 12) les plus proches de l'épissure (4) des câbles (2, 3).

8. Manchon conforme à l'une quelconque des revendications 1 à 7, caractérisé en ce que chaque extrémité (9, 10) du manchon (1) est prolongée par un embout (29) sensiblement cylindrique réalisé en deux parties identiques (29a, 29b) sensiblement jointives le long de deux génératrices diamétrales, l'extrémité de cet embout adjacent à l'extrémité du manchon portant des éléments de mâchoire (32a, 32b) destinés à prendre appui sur le câble (2, 3) de façon analogue aux éléments des mâchoires (11, 12, 13), chacun de ces éléments de mâchoire (32a, 32b) étant réalisé d'une seule pièce avec la partie correspondante (29a, 29b) de l'embout (29).

9. Manchon conforme à la revendication 8, caractérisé en ce que chaque partie (32a, 32b) de l'embout (29) comporte au voisinage de son extrémité adjacente à l'extrémité (9, 10) du manchon (1), une languette élastique (33a, 33b) en saillie vers l'extérieur et portant un bec d'encliquetage (35a, 35b) permettant la fixation amovible de l'embout (29) dans des ouvertures (34a, 34b) ménagées dans l'extrémité du manchon.

10. Manchon conforme à l'une quelconque des revendications 2 à 9, le bord de chacune des demi-coquilles (1a, 1b) présentant des trous (38) pour le passage des vis d'assemblage (6), caractérisé en ce que ces trous (38) débouchent dans la gorge (7) ménagée dans ledit bord, la largeur de cette gorge étant au niveau de chacun de ces trous plus grande que le diamètre de ces derniers.

11. Manchon conforme à la revendication 10, comprenant un orifice d'injection (40) et un évent (41) communiquant avec le canal (8) défini par les gorges (7) des bords assemblés des deux demi-coquilles (1a, 1b), caractérisé en ce que l'évent (41) est disposé entre deux rétrécissements (42) ménagés dans le canal (8).

12. Manchon conforme à l'une quelconque des revendications 1, 2, 4, 5 et 8 à 11, caractérisé en ce que chaque élément de mâchoire (100, 100a) comporte sur chacune de ces faces opposées (104, 105) une série de rainures (106a, ... 106g) s'étendant entre les ailes (102) suivant des arcs de cercle concentrique, le centre (O) de ces arcs de cercle étant, en position de service de ces éléments de mâchoire dans le manchon (107), placé sur l'axe de ce dernier, les rayons de ces rainures (106a, ... 106g) correspondant aux rayons des différents câbles (108) destinés à être placés dans le manchon (107).

13. Manchon conforme à la revendication 12, caractérisé en ce que les différentes rainures (106a, ... 106g) disposées sur l'une des faces (104, 105) des éléments de mâchoire (100, 100a) sont situées en regard des rainures disposées sur l'autre face, les fonds de ces rainures délimitant une paroi centrale (109) découpable au moyen d'un couteau.

14. Manchon conforme à la revendication 13, caractérisé en ce que l'épaisseur de ladite paroi découpable (109) est sensiblement égale au tiers de l'épaisseur d'un élément de mâchoire (100, 100a).

15. Manchon conforme à l'une quelconque des revendications 12 à 14, caractérisé en ce que les éléments de mâchoire (100, 100a) sont réalisés dans une matière telle que la déformabilité élastique de ces éléments de mâchoire, dans une direction radiale (D) aux rainures en arc de cercle (106a, ... 106g) soit plus grande que la déformabilité de la gaine (110) du câble (108) maintenu par ces éléments de mâchoire.

16. Manchon conforme à l'une quelconque des revendications 12 à 15, caractérisé en ce que les bords (208a, 208b) des ailes (202a, 202b) des éléments de mâchoire (200, 200a) forment un angle (a) de quelques degrés avec une droite (D) perpendiculaire à un plan médian M d'un élément de mâchoire, les deux bords d'un élément formant un angle obtus saillant vers l'extérieur.

17. Manchon conforme à la revendication 16, caractérisé en ce que l'angle (a) est compris entre 2 et 5°.

18. Manchon conforme à la revendication 16, caractérisé en ce que les bords (208a, 208b) des ailes (202a, 202b) comportent une série d'encoches (209a, 209b) situées en regard des différentes rainures (206a, 206b, 206c, ...).

19. Manchon conforme à l'une quelconque des revendications 16 à 18, caractérisé en ce que les éléments de mâchoire (200, 200a) sont réalisés en une matière thermoplastique.

## Claims

1. Sleeve for protecting the splice (4) of electric or telephone cables (2, 3) made up of two half-shells (1a, 1b) joined by their adjacent edges, around the splice, these adjacent edges being provided with a groove (7) which, when the edges are joined, defines a duct (8), means (40) being provided for injecting into this duct a pasty material creating waterproofing between the said adjacent edges, the opposite ends (9, 10) of the sleeve being provided with jaws (11, 12, 13) for fastening the ends of the cables axially to the sleeve and means for creating watertightness between these cables and the ends of the sleeve, characterised in that each of the ends (9, 10) of the sleeve bears at least two detachable jaws (11, 12) defining between them a chamber (18) connected with the duct (8).

2. Sleeve according to Claim 1, in which the two half-shells (1a, 1b) are joined on to one another by means of a tightening screw (6) characterised in that the jaws (11, 12) are of such measurements as to be able to bear on the cables (2, 3) when the connecting screws (6) of the two half-shells are tightened.

3. Sleeve according to any one of Claims 1 or 2, characterised in that an elastomer-based adhesive band is rolled around the ends of cables (2, 3), the two jaws (11, 12) being designed to bear on this adhesive band (20) when the half-shells (1a, 1b) are joined on to one another.

4. Sleeve according to any one of Claims 1 to 3, characterised in that the jaws (11, 12) are fastened in a detachable manner and held in position axially in seatings (14, 15) provided on the inner surface of the ends (9, 10) of sleeve (1).

5. Sleeve according to any one of Claims 1 to 4, characterised in that each jaw (11, 12) is provided with two jaw elements (11a, 11b), each of which has a notch (21a, 21b) which is substantially in the shape of a semi-circle with a radius adapted to that of the cable, this notch being bordered by two wings (22a, 22b, 23a, 23b) which end in stepped joint surfaces (26a, 26b, 27a, 27b) permitting interlocking of the wings of both vice components substantially in extension of one with the other, these stepped joint surfaces defining mutualbearing surfaces of the wings facing in opposite directions for each jaw element (11a, 11b).

6. Sleeve according to Claim 5, characterised in that the notch (21a, 21b) of each jaw element (11a, 11b) has a chamfered edge, the crest (28a, 28b) of which is directed towards the centre of the notch.

7. Sleeve according to any one of Claims 2 to 6, characterised in that each end (9, 10) of the sleeve carries three identical jaws (11, 12, 13) coming to bear on the elastomer-based adhesive band (20) rolled around cables (2, 3), the duct (8) arranged between the adjoining edges of the two joined half-shells (1a, 1b) emerging between the two jaws (11, 12) nearest the splice (4) of cables (2, 3).

8. Sleeve according to any one of Claims 1 to 7, characterised in that each end (9, 10) of sleeve (1) is extended by a sheath (29) which is substantially cylindrical in shape and is constructed of two identical parts (29a and 29b) which are joined substantially edge to edge along two diametrical generators, the end of this sheath adjoining the end of the sleeve bearing jaw elements (32a, 32b) designed to bear on the cable (2, 3) in a similar manner to the jaw elements (11, 12, 13), each of these jaw elements (32a, 32b) being made integral with the corresponding part (29a, 29b) of the sheath (29).

9. Sleeve according to Claim 8, characterised in that each part (32a, 32b) of the sheath (29) is provided near its end adjoining the end (9, 10) of sleeve (1) with an elastic tab (33a, 33b) projecting outwards and bearing a ratchet nose (35a, 35b) permitting detachable anchoring of the sheath (29) in apertures (34a, 34b) provided in the end of the sleeve.

10. Sleeve according to any one of claims 2 to 9, the edge of each of the half-shells (1a, 1b) having holes (38) to allow connecting screws (6) to pass through, characterised in that these holes (38) emerge in groove (7) provided in the said edge, this groove being wider at the level of these holes than the diameter of the latter.

11. Sleeve according to Claim 10, provided with an injection aperture (40) and a vent (41) connected with the duct (8) defined by grooves (7) in the connected edges of the two half-shells (1a, 1b), characterised in that the vent (41) is set between two narrow parts (42) provided in the duct (8).

12. Sleeve according to any one of Claims 1, 2, 4, 5 and 8 to 11, characterised in that each jaw element (100, 100a) is provided on each of its opposite surfaces (104, 105) with a series of channels (106a, ... 106g) extending between the wings (102) along arcs of concentric circles, the centre (O) of these arcs of circles being, in the working position of these elements in the sleeve (107), located on the axis of the latter, the radii of these channels (106a, ... 106g) corresponding to the radii of the different cables (108) to be placed in the sleeve (107).

13. Sleeve according to Claim 12, characterised in that the different channels (106a, ... 106g) set in one of jaw elements (100, 100a) are located opposite the channels set in the other surface, the base of these channels defining a centre wall (109) which can be cut with a knife.

14. Sleeve according to Claim 13, characterised in that the thickness of the said wall (109) which can be cut, is substantially equal to one-third of the thickness of a jaw element (100, 100a).

15. Sleeve according to any one of Claims 12 to 14, characterised in that jaw elements (100, 100a) are constructed of a material such that the elastic deformability o these jaw elements in a direction (D) radial to the channels forming arcs of circles (106a, ... 106g), is greater than the deformability of the conduit (110) of the cable (108) retained by these vice components.

16. Sleeve according to any one of Claims 12 to 15, characterised in that the edges (208a, 208b) of the wings (202a, 202b) of jaw elements (200, 200a) form an angle (a) of some degrees with a straight line (D) which is perpendicular to a median plane M of a jaw element, the two edges of an element forming an obtuse angle projecting outwards.

17. Sleeve according to Claim 16, characterised in that angle (a) is between 2 and 5°.

18. Sleeve according to Claim 16, characterised in that the edges (208a, 208b) of wings (202a, 202b) are provided with a series of notches (209a, 209b) located opposite the different channels (206a, 206b, 206c, ...).

19. Sleeve according to any one of Claims 16 to 18, characterised in that jaw elements (200, 200a) are made of a thermoplastic material.

**Ansprüche**

1. Hülse zum Schutz der Spleißung (4) von Strom- oder Telefonkabeln (2, 3) mit zwei Halbschalen (1a, 1b), die an ihren aneinander angrenzenden Rändern um die Spleißung herum zusammengesetzt sind, wobei diese aneinander angrenzenden Ränder eine Rille (7) enthalten, die in zusammengebauter Lage einen Kanal (8) begrenzen, wobei Mittel (40) vorgesehen sind, um in diesen Kanal einen pastenförmigen Stoff einzuspritzen, der die Dichtigkeit zwischen den aneinander angrenzenden Rändern herstellt, und wobei die einander gegenüberliegenden Enden (9, 10) der Hülse Spannbacken (11, 12, 13) zur axialen Festlegung der Kabelenden an der Hülse sowie Mittel zur Herstellung der Dichtigkeit zwischen diesen Kabeln und den Enden der Hülse umfassen, dadurch gekennzeichnet, daß jedes der Enden (9, 10) der Hülse wenigstens zwei entfernbare Spannbacken (11, 12) aufweist, die zwischen sich eine Kammer (18) begrenzen, die mit dem Kanal (8) in Verbindung ist.

2. Hülse nach Anspruch 1, bei welcher die beiden Halbschalen (1a, 1b) aneinander mittels Spannschrauben (6) befestigt sind, dadurch gekennzeichnet, daß die Spannbacken (11, 12) so dimensioniert sind, daß sie auf den Kabeln (2, 3) während des Anspannens der Montageschrauben (6) der beiden Halbschalen sich abstützen können.

3. Hülse nach Anspruch 1 oder 2, dadurch gekennzeichnet, daß ein Klebehand (20) auf Elastomerbasis um die Enden des Kabels (2, 3) herumgewickelt ist, wobei die beiden Spannbacken (11, 12) dazu bestimmt sind, beim Zusammenbau der beiden Halbschalen (1a, 1b) aufeinander sich auf diesem Klebeband (20) abzustützen.

4. Hülse nach einem der Ansprüche 1 bis 3, dadurch gekennzeichnet, daß die Spannbacken (11, 12) entfernbar befestigt und axial gehalten sind in Aufnahmen (14, 15), die auf der Innenseite der Enden (9, 10) der Hülse (1) angeordnet sind.

5. Hülse nach einem der Ansprüche 1 bis 4, dadurch gekennzeichnet, daß jede Spannbacke (11, 12) zwei Backenelemente (11a, 11b) umfaßt, die jeweils eine im wesentliche halbkreisförmige Aussparung (21a, 21b) aufweisen, deren Radius an den des Kabels angepaßt ist, wobei diese Aussparung von zwei Flügeln (22a, 22b, 23a, 23b) umrandet ist, die in Abstufungen (26a, 26b, 27a, 27b) enden, die das Zusammensetzen der Flügel der beiden Backenelemente im wesentlichen in gegenseitiger Verlängerung gestatten, wobei diese Abstufungen Oberflächen zum gegenseitigen Abstützen bilden, die für jedes Backenelement (11a, 11b) in entgegengesetzten Richtungen gerichtet sind.

6. Hülse nach Anspruch 5, dadurch gekennzeichnet, daß die Aussparung (21a, 21b) jedes Backenelementes (11a, 11b) ein abgeschrägtes Profil aufweist, dessen Scheitel (28a, 28b) zur Mitte der Aussparung gerichtet ist.

7. Hülse nach einem der Ansprüche 2 bis 6, dadurch gekennzeichnet, daß jedes Ende (9, 10) der Hülse drei einander gleiche Spannbacken (11, 12, 13) trägt, die sich auf dem Klebeband (20) auf Elastomerbasis, das um die Kabel (2, 3) herumgewickelt ist, abstützen, wobei der zwischen den aneinander angrenzenden, zusammengesetzten Halbschalen (1a, 1b) angeordnete Kanal (8) zwischen den beiden Spannbacken (11, 12) mündet, die der Spleißung (4) der Kabel (2, 3) am nächsten sind.

8. Hülse nach einem der Ansprüche 1 bis 7, dadurch gekennzeichnet, daß jedes Ende (9, 10) der Hülse (1) durch einen im wesentlichen zylindrischen Stutzen (29) verlängert ist, der aus zwei einander gleichen Teilen (29a, 29b) gebildet ist, die sich im wesentlichen längs der beiden diametralen Erzeugenden aneinanderfügen, wobei das Ende dieses Stutzens, das an das Ende der Hülse angrenzt, Backenelemente (32a, 32b) trägt, die dazu bestimmt sind, sich auf dem Kabel (2, 3) in analoger Weise wie die Backenelemente (11, 12, 13) abzustützen, wobei jedes dieser Backenelemente (32a, 32b) einteilig mit dem entsprechenden Teil (29a, 29b) des Stutzens (29) ausgebildet ist.

9. Hülse nach Anspruch 8, dadurch gekennzeichnet, daß jeder Teil (32a, 32b) des Stutzens (29) in der Nähe seines an das Ende (9, 10) der Hülse (1) angrenzenden Endes eine elastische Zunge (33a, 33b) aufweist, die nach außen vorsteht und eine Rastnase (35a, 35b) trägt, die eine lösbare Befestigung des Stutzens (29) in Öffnungen (34a, 34b) gestatten, welche in dem Ende der Hülse angebracht sind.

10. Hülse nach einem der Ansprüche 2 bis 9, bei welcher der Rand jeder Halbschale (1a, 1b) Löcher (38) für den Durchgang von Montageschrauben (6) aufweist, dadurch gekennzeichnet, daß diese Löcher (38) in der Rille (7) münden, die in dem Rand angebracht ist, wobei die Breite dieser Rille an jedem dieser Löcher größer ist als ihr Durchmesser.

11. Hülse nach Anspruch 10, mit einer Einspritzöffnung (40) und einer Luftaustrittsöffnung (41), die mit dem Kanal (8) in Verbindung sind, welcher durch die Rillen (7) der zusammengesetzten Ränder der beiden Halbschalen (1a, 1b) definiert ist, dadurch gekennzeichnet, daß die Luftaustrittsöffnung (41) zwischen zwei in dem Kanal (8) angebrachten Verengungen (42) angeordnet ist.

12. Hülse nach einem der Ansprüche 1, 2, 4, 5 sowie 8 bis 11, dadurch gekennzeichnet, daß jedes Backenelement (100, 100a) auf jeder seiner einander gegenüberliegenden Flächen (104, 105) eine Reihe von Rillen (106a, ... 106g) umfaßt, die sich zwischen den Flügeln (102) entlang konzentrischen Kreisbögen erstrecken, wobei die Mitte (O) dieser Kreisbögen in der Gebrauchsstellung dieser Backenelemente in der Hülse (107) auf der Achse derselben liegt und wobei die Radien dieser Rillen (106a, ... 106g) den Radien der verschiedenen Kabel (108) entsprechen, die dazu bestimmt sind, in die Hülse (107) eingebracht zu werden.

13. Hülse nach Anspruch 12, dadurch gekennzeichnet, daß die verschiedenen Rillen (106a, ... 106g), die auf einer der Flächen (104, 105) der Backenelemente (100, 100a) angeordnet sind, den Rillen gegenüberliegen, die auf der anderen Fläche angeordnet sind, wobei die Böden dieser Rillen eine zentrale Wandung (109) begrenzen, die mittels eines Messers zerschneidbar ist.

14. Hülse nach Anspruch 13, dadurch gekennzeichnet, daß Dicke der zerschneidbaren Wandung (109) im wesentlichen gleich einem Drittel der Dicke eines Backenelementes (100, 100a) ist.

15. Hülse nach einem der Ansprüche 12 bis 14, dadurch gekennzeichnet, daß die Backenelemente (100, 100a) aus einem solchen Werkstoff gebildet sind, daß die elastische Deformierbarkeit dieser Backenelemente in einer Richtung (D) radial zu den kreisbogenförmigen Rillen (106a, ... 106g) größer ist als die Deformierbarkeit der Ummantelung (110) des Kabels (108), das durch diese Backenelemente gehalten ist.

16. Hülse nach einem der Ansprüche 12 bis 15, dadurch gekennzeichnet, daß die Ränder (208a, 208b) der Flügel (202a, 202b) der Backenelemente (200, 200a) einen Winkel (a) von einigen Grad mit einer Geraden (D) bilden, die senkrecht auf einer Mittelebene (M) eines Backenelementes ist, wobei die beiden Ränder eines Elementes einen stumpfen Winkel bilden, der nach außen vorspringt.

17. Hülse nach Anspruch 16, dadurch gekennzeichnet, daß der Winkel (a) zwischen 2 und 5° beträgt.

18. Hülse nach Anspruch 16, dadurch gekennzeichnet, daß die Ränder (208a, 208b) der Flügel (202a, 202b) eine Reihe von Aussparungen (209a, 209b) enthalten, die gegenüber den verschiedenen Rillen (206a, 206b, 206c, ...) liegen.

19. Hülse nach einem der Ansprüche 16 bis 18, dadurch gekennzeichnet, daß die Backenelemente (200, 200a) aus einem thermoplastischen Material gebildet sind.

Fig.1

Fig.2

0 039 703

Fig. 3

Fig. 6

0 039 703

# Fig. 4

# Fig. 5

0 039 703

Fig.7

Fig.8

# Fig.9

# Fig.10

# Fig.11

# Fig.12

FIG_13

FIG_14

FIG_15

FIG_16

FIG_18

FIG_17

6